# EUROPÄISCHE PATENTSCHRIFT

(11) **EP 1 487 608 B1**
(45) Veröffentlichungstag und Bekanntmachung des Hinweises auf die Patenterteilung: **05.08.2009**
(21) Anmeldenummer: 03744348.8
(22) Anmeldetag: 11.03.2003
(51) Int. Cl.: B23Q 1/54, B23Q 39/02

(54) **SPINDELKOPF FÜR EINE UNIVERSAL-FRÄSMASCHINE**
SPINDLE HEAD FOR A UNIVERSAL MILLING MACHINE
NEZ DE BROCHE POUR FRAISEUSE UNIVERSELLE

(30) Priorität: 19.03.2002 DE 20204365 U
(43) Veröffentlichungstag der Anmeldung: 22.12.2004
(73) Patentinhaber: DECKEL MAHO Pfronten GmbH, 87459 Pfronten (DE)
(72) Erfinder: GSTIR, Walter, 6677 Schattwald (AT); HAAS, Peter, 87669 Rieden (DE); FRITZ, Helmut, 87659 Hopferau (DE)
(74) Vertreter: Beetz & Partner
(86) Internationale Anmeldenummer: PCT/EP2003/002488
(87) Internationale Veröffentlichungsnummer: WO 2003/078101

(56) Entgegenhaltungen:
- EP-A- 1 038 630
- EP-A- 1 074 338
- DE-A- 4 308 419
- DE-A- 10 027 509
- DE-A- 19 850 603
- DE-U- 8 809 972
- DE-U- 29 623 999
- DE-U- 29 907 810
- FR-A- 2 694 720
- US-A- 5 664 308

## Beschreibung

Die Erfindung betrifft einen Spindelkopf für eine Universal-Fräsmaschine, der im Oberbegriff des unalbhängigen Patentanspruchs 1 angegebenen Gattung sowie eine mit einem solchen Spindelkopf ausgerüstete Universal-Fräsmaschine. Ein solcher Spindelkopf ist im Prospekt 'MAHO MH 1000C Universal-Fräs- und Bohrmaschine' von MAHO Werkzeugmaschinenbau Babel & Co, (Pfronten (DE), Juni 1984) dargestellt.

In neuerer Zeit wird die Komplexbearbeitung von Werkstücken in einer Aufspannung angestrebt, um Produktionsleistung und Genauigkeit zu erhöhen. Es sind bereits verschiedene Universal-Fräsmaschinen bekannt, in denen auch relativ große und sperrige Werkstückes durch Verwendung von drehangetriebenen Rundtischen durch Fräsen und Drehen bearbeitet werden können. Daneben ist es seit langem üblich, Schrupp- und auch Schlichtarbeiten an eienm Werkstück in der gleichen Maschine auszuführen, wobei hierzu allerdings die unterschiedlichen Werkzeuge in die einzige Arbeitsspindel ein- bzw. ausgewechselt werden müssen, was naturgemäß mit gewissen Zeitverlusten verbunden ist.

Ferner sind Universal-Fräsmaschinen z.B. aus der DE 299 07 810 U bekannt, die an einer gemeinsamen Konsole zwei Fräs- bzw. Spindelköpfe aufweisen. Die Konsole hat die Form eines gleichschenkligrechtwinkligen Prismas und ist mit ihrer Hypotenusenfläche auf einer 45°-Tragfläche um deren Mittelachse verdrehbar gelagert. Auf ihren beiden zueinander rechtwinkligen Kathederflächen ist je ein Fräskopf fest montiert. Durch eine motorische Drehbewegung der Konsole um ihre 45°-Achse kann der eine oder der andere Fräskopf in die Bearbeitungsstellung gebracht werden, in welcher das in seine jeweilige Arbeitsspindel eingespannte Fräs- oder Bohrwerkzeug das Werkstück in der gleichen Einspannung spanend bearbeitet. Die für den Wechsel der Frässpindeln notwendige Konsole beschränkt den freien Arbeitsraum und erfordert einen erheblichen konstruktiven und kostenmäßigen Mehraufwand.

In der DE 296 23 999 U1 ist ein direkt angetriebener mehrachsiger Drehspindelkopf für Fräsmaschinen beschrieben, der eine um eine erste Achse drehbare Gabel mit zwei voneinander beabstandeten Gabelarmen aufweist. In den Gabelarmen sind miteinander fluchtende Bohrungen ausgebildet, in denen eine Arbeitsspindel über zwei diametral abstehende Zapfen verdrehbar gelagert ist. Zur Verdrehung der Gabel um die erste Achse und zum Verschwenken der Arbeitsspindel in den Gabelbohrungen dient jeweils ein als E-Motor ausgeführter Direktantrieb.

Weiterhin ist noch eine - gattungsfremde - Vorrichtung zur Positionierung eines Werkstücks aus der DE 88 09 972 U bekannt, die eine das Werkstück aufnehmende Planscheibe aufweist. Durch unterschiedlich miteinander kombinierbare Antriebseinheiten soll diese Positioniervorrichtung derart modular ausbau- und erweiterbar sein, daß die Planscheibe um eine erste Achse motorisch drehbar, um eine zweite Achse motorisch kippbar und/oder um eine dritte Achse motorisch schwenkbar sein kann.

Aufgabe der Erfindung ist es, einen Spindelkopf für eine Universal-Fräsmaschine zu schaffen, der eine Komplexbearbeitung auch sperriger und großvolumiger Werkstücke in einer Aufspannung bei verminderten Zeitverlusten ermöglicht.

Diese Aufgabe wird erfindungsgemäß durch die im Anspruch 1 angegebenen Merkmale gelöst.

Durch die Erfindung wird der Arbeitsbereich der mit dem Spindelkopf ausgerüsteten Werkzeugmaschine erheblich vergrößert. Die im Spindelgehäuse integrierte erste Arbeitsspindel ist zur Durchführung der verschiedenen Fräs- und Bohrarbeiten ausgelegt und auch für den Schruppbetrieb dimensioniert. Dementsprechend können mit dieser Arbeitsspindel die normalerweise anfallenden Bearbeitungsarten mit jeweils hoher Spanleistung durchgeführt werden. Schrupp- und gröbere Schlichtarbeiten sind in gleicher Weise möglich. Das Vorsehen einer in zwei Achsen verstellbaren zweiten Spindeleinheit an der Rückseite des Spindelgehäuses erweitert den Arbeitsbereich einer Werkzeugmaschine, da nunmehr auch feine Schlichtarbeiten, Gravuren, Feinbohrungen und dergleichen auf einfache Weise und ohne vorherigen Werkzeugwechsel ausgeführt werden können. Durch die Einstellmöglichkeit der zweiten Arbeitsspindel in zwei zueinander senkrechten Achsen lassen sich auf einfache Weise Schrägbohrungen- und -nuten, Hinterschnitte sowie durch kontinuierliche Winkelverstellung auch ballige Flächen am Werkstück ausarbeiten.

Gegenstand der Erfindung ist ferner eine Universal-Fräsmaschine gemäß Anspruch 8 mit einem in der vorgenannten Weise ausgebildeten Spindelkopf und einem Rundtisch zur Aufnahme sperriger und voluminöser Werkstücke, der über einen leistungsfähigen Drehantrieb verfügt, mit dem das Werkstück in Rotation mit mehreren 100 U/min versetzt werden kann. Dies ermöglicht zusätzlich die Ausführung bestimmter Dreharbeiten am Werkstück nach einspannen eines Drehwerkzeuges vorzugsweise in die erste leistungsfähigere Arbeitsspindel. Daneben können jedoch auch mit der zweiten Spindel Fräsarbeiten am rotierenden Werkstück durchgeführt werden.

Zweckmäßige Weiterbildungen und Ausgestaltungen der Erfindung sind in den Unteransprüchen angegeben.

Zum Erhalt einer hohen Flexibilität bei guter Steifigkeit weist die zweite Spindeleinheit einen an der Rückseite des Spindelgehäuses verdrehbar montierten Gabelkopf auf, zwischen dessen Gabel eine direktangetriebene Arbeitsspindel verschwenkbar gelagert ist. Zweckmäßig kann diese Arbeitsspindel eine Hochgeschwindigkeitsspindel (HS-Spindel) mit Drehzahl von über 20 000 U/min sein.

Zweckmäßigerweise ist der Gabelkopf konstruktiv so ausgelegt, daß seine Drehachse zur Achse der im Gehäuse eingebauten Arbeitsspindel parallel und seitlich derart versetzt ist, daß bei achsparalleler Ausrichtung der beiden Arbeitsspindeln die beiden Spindelachsen miteinander fluchten, d.h. zusammenfallen.

Arbeitsspindeln sind normalerweise an zwei Versorgungssysteme, Energieversorgung und Spülung, angeschlossen, und zwar über zwei flexible Schlauchzuleitungen. Gemäß einer zweckmäßigen Ausgestaltung der Erfindung ist am Gabelkopf nur ein einziger flexibler Versorgungsschlauch angeschlossen, wobei der Anschluß an das zweite Versorgungssystem über eine interne Drehdurchführung des Gabelkopfes zum Spindelgehäuse erfolgt.

Um die Winkelverstellung der Arbeitsspindel in den Gabeln und auch die Drehstellung des Gabelkopfes am Spindelgehäuse einstellen und insbesondere die eingestellten Lagen auch ausreichend fest fixieren zu können, ist gemäß einer weiteren zweckmäßigen Ausgestaltung der Erfindung am Gabelkopf ein E-Motor und ein Getriebe als Schwenkantrieb der zweiten Arbeitsspindel sowie im Gehäuse ein weiterer E-Motor als Direktantrieb für die Verdrehung des Gabelkopfes vorgesehen.

Weitere Besonderheiten und Vorzüge der Erfindung ergeben sich aus der folgenden Beschreibung des erfindungsgemäßen Spindelkopfes in einer Universal-Fräsmaschine anhand der Zeichnung. Es zeigen:
Fig. 1 eine Universal-Fräsmaschine mit dem erfindungsgemäßen Spindelkopf in schematischer perspektivischer Darstellung;
Fig. 2 verschiedene Betriebsstellungen des Spindelkopfes in jeweils schematischer perspektivischer Darstellung.

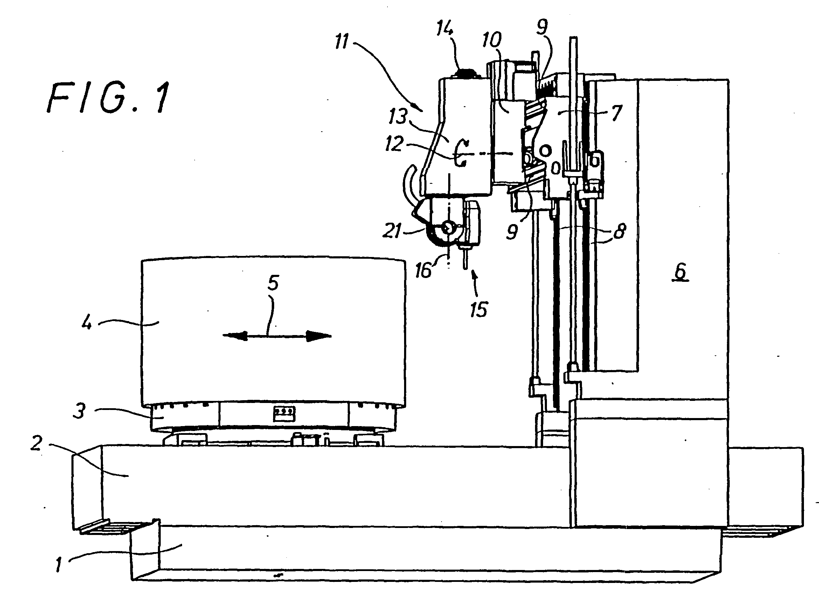

Die in Fig. 1 dargestellte Universal-Fräsmaschine enthält auf einem Unterbau 1 ein durchgehendes hochsteifes Maschinenbett 2, auf dem ein Rundtisch 3 mit darauf aufgespanntem zylindrischen Werkstück 4 in Richtung des Pfeils 5 motorisch verfahrbar angeordnet ist. Auf dem Unterbau 1 stützt sich ferner ein Ständer 6 in Portalbauweise ab, an dessen dem Werkstück 4 zugewandter Vorderseite ein Schlitten 7 in Vertikalführungen 8 motorisch verfahrbar angeordnet ist. An vorderen Horizontalschienen 9 dieses Vertikalschlittens 7 ist ein Horizontalschlitten 10 geführt, an dessen Vorderseite ein Spindelkopf 11 um eine horizontale Achse 12 motorisch verdrehbar befestigt ist. Dieser Spindelkopf 11 hat ein Gehäuse 13, in welchem eine erste Arbeitsspindel 14 zusammen mit einem direkten Antriebsmotor aufgenommen ist. In dem in Fig. 1 verbreiterten unteren Teil des Spindelgehäuses 13 befindet sich ein Drehantrieb für einen Gabelkopf 15, der an der der ersten Arbeitsspindel 14 entgegengesetzten Endseite des Gehäuses um eine Achse 16 verdrehbar montiert ist.

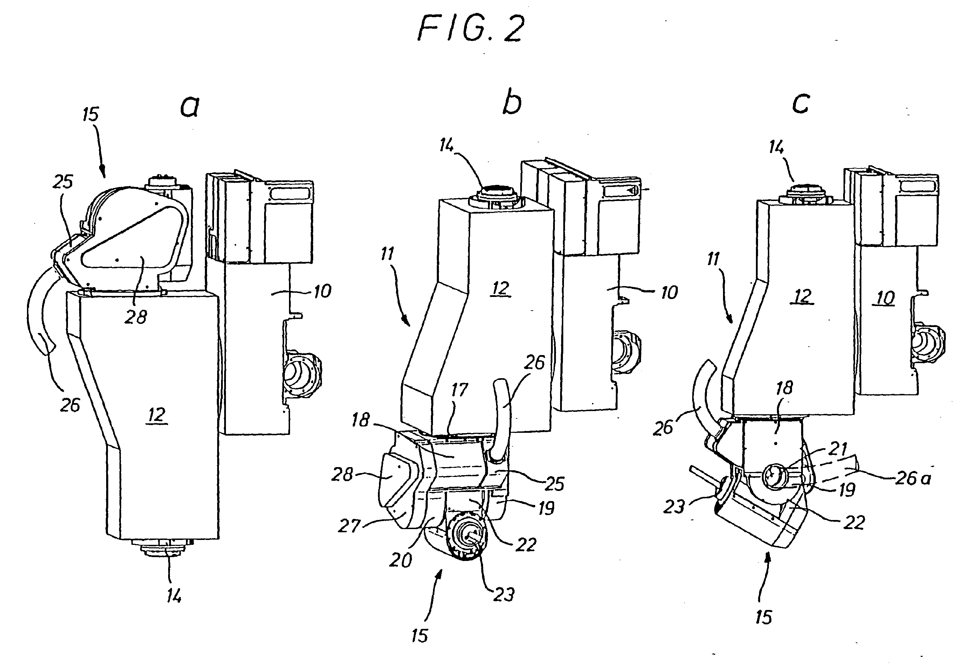

Wie insbesondere aus Fig. 2b ersichtlich, ist der Gabelkopf 15 über eine Drehscheibe 17 an der Gehäuserückwand befestigt, die eine - nicht dargestellte - Drehdurchführung für einen ersten Typ von Versorgungsleitungen umgibt. Der Gabelkopf 15 enthält einen Gehäuseteil 18 und zwei endseitige Gabeln 19, 20 mit jeweils einem Durchbruch 21, in denen ein Spindelgehäuse 22 über zwei Lagerzapfen um die Zapfenachse verschwenkbar gelagert ist. In diesem Spindelgehäuse 22 befindet sich die zweite Arbeitsspindel 23 zusammen mit ihrem - nicht dargestellten - Antriebsmotor. An der einen Seite des Gehäuseteils 18 des Gabelkopfes 15 ist ein Anschluß 25 für einen einzigen flexiblen Versorgungsschlauch 26 vorgesehen. Wie aus Fig. 2a, 2b ersichtlich, befindet sich an der anderen Seite des Gabelkopfes 15 in einem schmalen Gehäuseteil 27 ein elektrischer Antriebsmotor, der über ein durch einen seitlichen Deckel 28 abgedecktes Getriebe die zweite Arbeitsspindel 23 mit ihrem Gehäuse 22 um die Lagerzapfen 21 veschwenkt und in der jeweils gewünschten Spindelstellung mit ausreichend hohem Haltemoment fixiert.

Wie in Fig. 2 auszugsweise gezeigt, kann der erfindungsgemäße Spindelkopf in verschiedenartigen Stellungen eine Vielzahl von Bearbeitungsoperationen ausführen. In der Betriebsstellung nach Fig. 2a ist die besonders leistungsfähige erste Spindel 14 betriebsbereit, d.h. nach Einwechseln eines entsprechenden Werkzeugs können insbesondere Schrupparbeiten an dem Werkstück 4 ausgeführt werden. Zur Durchführung von verschiedenartigen Feinarbeiten am Werkstück 4 wird der Spindelkopf um seine horizontale Achse 12 um 180° gedreht, so daß sich dann der Gabelkopf mit der zweiten Arbeitsspindel 23 in seiner betriebsbereiten Position befindet. Für eine kollisionsfreie Drehbewegung des Spindelkopfes 11 ist es wesentlich, daß die verschiedenen Bauteile des Gabelkopfes nicht oder nur unwesentlich über das Spindelgehäuse 12 vorstehen, wie dies z.B. den Fig. 1 und 2a zu entnehmen ist.

Die Erfindung ist nicht auf das dargestellte Ausführungsbeispiel beschränkt. So kann beispielsweise der erfindungsgemäße Spindelkopf auch bei Einsatz an einer sogenannten Konsol-Maschine mit vertikal verfahrbarem Werkstücktisch als Horizontalkopf ausgebildet und z.B. auf der Oberseite eines Ständers um eine Vertikalachse verdrehbar angeordnet sein. Daneben sind auch verschiedene Varianten des Gabelkopfes möglich, beispielsweise der Wegfall der einen oder anderen Gabel 19, 20, so daß das Gehäuse 22 der Feinspindel nur einseitig gehalten und verdrehbar gelagert ist. Schließlich kann als Schwenkantrieb für die Feinspindel 23 auch ein sogenannter Direktantrieb verwendet werden, bei welchem der Stator in zumindest einer der Gabeln 19, 20 und der Rotor eines derartigen E-Motors auf dem jeweiligen Lagerzapfen des Spindelgehäuses 22 befestigt sind. Durch einen derartigen Direktantrieb kann das vom Deckel 28 abgedeckte Getriebe entfallen. Als weitere Variante kann der Versorgungsschlauch - wie in Fig. 2c in Strichlinien angedeutet - an das Zapfenlager 21 des Feinspindelgehäuses 22 angeschlossen sein.

## Patentansprüche

1. Spindelkopf für eine Universal-Fräsmaschine mit einem an einem Maschinenständer verfahrbaren Maschinenteil (10), mit:
- einem am Maschinenteil (10) um eine erste Achse (13) verdrehbar montierbaren Gehäuse (12),
- einer achsparallel im Gehäuse (12) angeordneten direktangetriebenen ersten Arbeitsspindel (14) zur Durchführung von Schrupp- und Schlichtarbeiten an einem auf einem Werkstücktisch (3) aufgespannten Werkstück (4),
**dadurch gekennzeichnet, daß**
- an der der ersten Arbeitsspindel (14) entgegengesetzten Endseited des Gehäuses (12) eine um zwei Achsen verstellbare zweite Spindeleinheit (15) angeordnet ist, die in einem Spindelgehäuse (22) eine zweite Arbeitsspindel (23) mit eigenem Antriebsmotor zur Feinbearbeitung des eingespannten Werkstücks (4) enthält.

2. Spindelkopf nach Anspruch 1,
**dadurch gekennzeichnet, daß**
die zweite Spindeleinheit einen Gabelkopf (15) enthält, der an der Endseite des Gehäuses (12) um eine Drehachse (16) verdrehbar montiert ist und in dessen Gabeln (19, 20) das Spindelgehäuse (22) der zweiten Arbeitsspindel (23) motorisch verschwenkbar gelagert ist.

3. Spindelkopf nach Anspruch 2,
**dadurch gekennzeichnet, daß**
die Drehachse (16) des Gabelkopfes (15) zur Achse der im Gehäuse (12) eingebauten ersten Arbeitsspindel (14) parallel verläuft und seitlich zu dieser versetzt ist.

4. Spindelkopf nach einem der vorstehenden Ansprüche,
**dadurch gekennzeichnet, daß**
bei achsparalleler Ausrichtung der beiden Arbeitsspindeln (14, 23) ihre Achsen zusammenfallen.

5. Spindelkopf nach einem der vorstehenden Ansprüche,
**dadurch gekennzeichnet, daß** am Gabelkopf (15) ein flexibler Versorgungsschlauch (26, 26a) angeschlossen ist.

6. Spindelkopf nach einem der vorstehenden Ansprüche,
**dadurch gekennzeichnet, daß** der Gabelkopf (15) einen E-Motor und ein Getriebe als Schwenkantrieb der zweiten Arbeitsspindel (23) aufweist.

7. Spindelkopf nach einem der vorstehenden Ansprüche,
**dadurch gekennzeichnet, daß**
die Schwenkachse der zweiten Arbeitsspindel (23), die Drehachse (16) des Gabelkopfes (15) und die Drehachse (13) des Gehäuses (12) in zueinander rechtwinkligen Ebenen verlaufen.

8. Universal-Fräsmaschine mit
- einem auf einem hochsteifen Maschinenbett (2) drehbar gelagerten Rundtisch (3) zur Aufnahme eines sperrigen und voluminösen Werkstücks (4),
- einem leistungsfähigen Drehantrieb für den Rundtisch (3), der das aufgespannte Werkstück (4) zur Ausführung von Dreharbeiten in Rotation mit mehreren 100 U/min versetzen kann,
- einem Maschinenständer (6) mit vorderseitigen motorisch in zwei Koordinatenachsen verfahrbaren Schlitten (7, 10) und
- einem am vorderen Schlitten (10) um die horizontale Drehachse (13) motorisch verdrehbaren Spindelkopf (11) nach einem der vorstehenden Ansprüche.

## Claims

1. Spindle head for a universal milling machine having a machine part (10) which can move on a machine column, having:
- a housing (12) which can be mounted on the machine part (10) so as to be rotatable about a first axis (13),
- a directly-driven first drive spindle (14) which is disposed in an axially parallel manner in the housing (12) for effecting roughing-down and finishing-machining work on a workpiece (4) clamped on a workpiece table (3),
**characterised in that**
- on the end face of the housing (12) opposite the first working spindle (14) is disposed a second spindle unit (15) which can be displaced about two axes and contains, in a spindle housing (22), a second working spindle (23) with its own drive motor for fine machining of the clamped-in workpiece (4).

2. Spindle head as claimed in claim 1, **characterised in that** the second spindle unit contains a yoke (15) which is mounted on the end face of the housing (12) so as to be rotatable about an axis of rotation (16) and in the arms (19, 20) of which the spindle housing (22) of the second working spindle (23) is mounted so as to be pivotable in a motor-driven manner.

3. Spindle head as claimed in claim 2, **characterised in that** the axis of rotation (16) of the yoke (15) extends in parallel with the axis of the first working spindle (14) installed in the housing (12) and is offset laterally with respect to this working spindle.

4. Spindle head as claimed in any one of the preceding claims, **characterised in that** when the two working spindles (14, 23) are aligned in an axially parallel manner their axes coincide.

5. Spindle head as claimed in any one of the preceding claims, **characterised in that** a flexible supply hose (26, 26a) is attached to the yoke (15).

6. Spindle head as claimed in any one of the preceding claims, **characterised in that** the yoke (15) has an electric motor and a transmission as the pivot drive for the second working spindle (23).

7. Spindle head as claimed in any one of the preceding claims, **characterised in that** the pivot axis of the second working spindle (23), the axis of rotation (16) of the yoke (15) and the axis of rotation (13) of the housing (12) extend in planes which are at right angles to each other.

8. Universal milling machine having - a rotary table (3) rotatably mounted on a highly rigid machine bed (2) and intended to receive a cumbersome and voluminous workpiece (4),
- a powerful rotary drive for the rotary table (3), which can cause the clamped-on workpiece (4) to rotate at several hundred rpm in order for turning work to be carried out,
- a machine column (6) with carriages (7, 10) on the front side which can be motor-driven in two coordinate axes and
- a spindle head (11), as claimed in any one of the preceding claims, on the front carriage (10) which can be rotated in a motor-driven manner about the horizontal axis of rotation (13).

## Revendications

1. Nez de broche pour une fraiseuse universelle avec une partie de machine (10) pouvant se déplacer sur un support, comprenant :
- un boîtier (12) pouvant être monté de manière à être rotatif autour d'un premier axe (13) sur la partie de machine (10),
- un premier arbre moteur (14) à entraînement direct, disposé dans le boîtier (12) parallèlement à un axe pour réaliser des travaux d'ébauche et de finition sur une pièce à usiner (4), serrée sur une table porte-pièce (3),
**caractérisé en ce que**
- une deuxième unité support de broche (15) orientable autour de deux axes, qui contient, dans un logement à broche (22), un deuxième arbre moteur (23) ayant son propre moteur d'entraînement pour l'usinage de précision de la pièce à usiner (4) insérée, est disposée sur une partie terminale du boîtier (12), opposée au premier arbre moteur (14).

2. Nez de broche selon la revendication 1,
**caractérisé en ce que**
la deuxième unité support de broche contient une tête de chape (15), qui est montée de manière à être rotative autour d'un axe de rotation (16) sur une partie terminale du boîtier (12) et dont les parties latérales (19, 20) maintiennent le logement à broche (22) du deuxième arbre moteur (23) de manière à ce qu'il puisse osciller à l'aide d'un moteur.

3. Nez de broche selon la revendication 2,
**caractérisé en ce que**
l'axe de rotation (16) de la tête de chape (15) est parallèle à l'axe du premier arbre moteur (14) encastré dans le boîtier (12) et est décalé latéralement par rapport à celui-ci.

4. Nez de broche selon l'une des revendications précédentes,
**caractérisé en ce que**
en cas d'orientation axialement parallèle des deux arbres moteur (14, 23), leurs axes coïncident.

5. Nez de broche selon l'une des revendications précédentes,
**caractérisé en ce que**
un tuyau flexible d'alimentation (26, 26a) est raccordé à la tête de chape (15).

6. Nez de broche selon l'une des revendications précédentes,
**caractérisé en ce que**
la tête de chape (15) présente un moteur électrique et un engrenage à titre d'entraînement oscillant du deuxième arbre moteur (23).

7. Nez de broche selon l'une des revendications précédentes,
**caractérisé en ce que**
l'axe d'oscillation du deuxième arbre moteur (23), l'axe de rotation (16) de la tête de chape (15) et l'axe de rotation (13) du boîtier (12) se situent dans des plans perpendiculaires les uns aux autres.

8. Fraiseuse universelle comprenant
- un plateau circulaire (3) placé de manière à être rotatif sur un bâti de machine (2) hautement rigide pour recevoir une pièce à usiner (4) volumineuse et encombrante,
- un entraînement rotatif performant pour le plateau circulaire (3), qui peut déplacer la pièce à usiner (4) serrée à une vitesse de rotation de plusieurs centaines de t/min pour réaliser des travaux de tournage,
- un support (6) avec des chariots (7, 10), placés sur les flancs avant, déplaçables à l'aide d'un moteur dans deux axes de coordonnées, et
- un nez de broche (11) selon l'une des revendications précédentes, pouvant entrer en rotation à l'aide d'un moteur autour de l'axe de rotation horizontal (13) sur le chariot avant (10).
